(19) Europäisches Patentamt
European Patent Office
Office européen des brevets

(11) Publication number: 0 057 026 B1

(12) EUROPEAN PATENT SPECIFICATION

(45) Date of publication of patent specification: 25.06.86

(51) Int. Cl.[4]: C 09 K 11/78, H 01 J 61/44

(21) Application number: 82200028.7

(22) Date of filing: 12.01.82

# (54) Luminescent screen.

(30) Priority: 26.01.81 NL 8100346

(43) Date of publication of application: 04.08.82 Bulletin 82/31

(45) Publication of the grant of the patent: 25.06.86 Bulletin 86/26

(84) Designated Contracting States: BE DE FR GB IT NL

(56) References cited:
EP-A-0 023 068
DE-A-1 717 180
DE-A-2 730 063
GB-A-2 016 034
US-A-3 375 465

JOURNAL OF LUMINESCENCE, vol. 18/19, part II, January 1979, pages 797-800 AMSTERDAM (NL) J.Th.W. DE HAIR: "The Intermediate Role of Gd3+ in the Energy Transfer from a Sensitizer to an Activator"

The file contains technical information submitted after the application was filed and not included in this specification

(73) Proprietor: N.V. Philips' Gloeilampenfabrieken
Groenewoudseweg 1
NL-5621 BA Eindhoven (NL)

(72) Inventor: Konijnendijk, Willem Leendert
c/o Int. Octrooibureau B.V. Prof.Holstlaan 6
NL-5656 AA Eindhoven (NL)
Inventor: Rutten, Jozefus
c/o Int. Octrooibureau B.V. Prof.Holstlaan 6
NL-5656 AA Eindhoven (NL)

(74) Representative: Evers, Johannes Hubertus Marie et al
INTERNATIONAAL OCTROOIBUREAU B.V Prof. Holstlaan 6
NL-5656 AA Eindhoven (NL)

EP 0 057 026 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention relates to a luminescent screen comprising, provided on a carrier, a luminescent rare earth metal metaborate defined by the formula

$$(Y, La)_{1-x-y-z}Ce_xGd_yTb_z(Mg, Zn)_{1-p}Mn_pB_5O_{10},$$

wherein

when $y=z=p=0$, it holds that
$0,01 \leq x \leq 1,0$,
when $z=p=0$ and $y \neq 0$, it holds that
$0.01 \leq x \leq 1-y$
$0.02 \leq y \leq 0.80$,
when $p=0$ and $z \neq 0$, it holds that
$0.01 \leq x \leq 1-y-z$
$0 \leq y \leq 0,98$
$y+z \leq 0.99$
$0.01 \leq z \leq 0.75$,
when $z=0$ and $p \neq 0$, it holds that
$0.01 \leq x \leq 1-y$
$0 \leq y \leq 0.99$
$0.01 \leq p \leq 0.30$,
and both $p \neq 0$ and $z \neq 0$, it holds that
$0.01 \leq x \leq 1-y-z$
$0 \leq y \leq 0.98$
$0.01 \leq z \leq 0.75$
$y+z \leq 0.99$
$0.01 \leq p \leq 0.30$,

and wherein up to 20 mol.% of the B may be replaced by Al and/or Ga. In addition, the invention relates to a low-pressure mercury vapour discharge lamp comprising such a luminescent screen.

The said luminescent metaborates are described in Netherlands Patent Application 7905680 (PHN 9544), which has not yet been laid open to public inspection (corresponding to EP—A 23068). These borates are crystalline materials, the host lattice of which may be represented by the formula (Y, La) (Mg, Zn) $B_5O_{10}$, and have a monoclinic crystal structure which corresponds to that of $SmCoB_5O_{10}$ and $LaCoB_5O_{10}$ (see J. of Solid State Chem., *34* (1980), 271—277). It has been found that the metaborates which contain Y and/or La, together with Mg and/or Zn can form materials which luminesce very efficiently on activation by one or more of the activator elements Ce, Gd, Tb and Mn. They can be very well excited by ultraviolet radiation, particularly shortwave ultraviolet radiation. They are therefore very suitable for practical use in the luminescent screen of a low-pressure mercury vapour discharge lamp. In addition, it has been found that these borates may also be excited in a different manner, for example by electrons. The spectral distribution of the radiation emitted by the borates depends on the activator(s) used. The concentration of a given activator is chosen within a predetermined range, as below a certain minimum concentration too low an absorption of the excitation energy and/or too low a quantum efficiency is found, and as above a certain maximum concentration radiation fluxes of too low a value are obtained, owing to concentration quenching.

The invention has for its object to provide novel luminescent rare earth metal metaborates which, when used in a luminescent screen, show very desired luminescent properties.

According to the invention, a luminescent screen of the type defined in the preamble is characterized in that the metaborate contains Cd which partly or wholly replaces the Mg and/or Zn.

It has been found that in the present metaborates the magnesium and/or zinc may be wholly or partly substituted by cadmium. Both at very low quantities of Cd (for example when 1 mol.% or less of the Mg and/or Zn is replaced by Cd) and at large quantities of Cd (up to 100 mol.%) the monoclinic crystal structure of the borate is retained and luminescent materials are obtained the quantum efficiency of which can be as high as the quantum efficiency of the materials which contain only Mg and/or Zn.

If the borates defined by the above-mentioned general formula and in which part or all of the (Mg, Zn) has been replaced by Cd are activated by Ce only (that is to say $y=z=p=0$), materials are obtained which have an efficient, very shortwave narrow-band emission. The emission maximum is located at 300—305 nm and the half-value width of the emission band is 35 nm. In these materials, which are particularly suitable for use in the luminescent screen of low-pressure mercury vapour discharge lamps for photo-chemical purposes, for example for producing erythema, a Ce-content $x$ of at least 0.01 is chosen. The maximum value of $x$ is 1.0, as disturbing concentration quenching does not occur in these materials.

The Ce and Gd-activated Cd-containing borates (wherein $z=p=0$) are efficiently luminescing materials which emit the characteristic line emission of Gd with an emission maximum at approximately 313 nm. In these materials transfer of the excitation energy occurs from the Ce-ions to Gd-ions. The

Gd-concentration *y* can then be chosen between wide limits (from 0.02 to 0.80). The minimum Ce concentration *x* here is also 0.01. Since concentration quenching does substantially not have a disturbing effect, the Ce-content may be increased until all the available Y and/or La-sites are occupied ($x \leq 1-y$). The borates with Gd emission are utilized in the luminescent screen of low-pressure mercury vapour discharge lamps for photo-chemical uses, particularly for radiation purposes, for example the phototherapy of skin diseases such as psoriasis.

The Ce and Tb-activated borates used in luminescent screens according to the invention ($p=0$) are very efficiently green-luminescing materials (characteristic Tb-emission). In these materials the excitation energy is again absorbed by the Ce and transferred to the Tb. Also here the Ce-content *x* is at least 0.01. The Tb-content *z* must be at least 0.01 and not more than 0.75. These borates may also contain Gd (*y* from 0 to 0.98), the energy transfer from the Ce to the Tb partly proceding *via* Gd-ions. The sum of the Gd and Tb-content $y+z$ must not be more than 0.99, as at least 0.01 mole Ce must be present. The upper limit of the Ce-content is again determined by the number of available sites in the lattice ($x \leq 1-y-z$). The green-luminescing, Tb-activated borates are utilized in the luminescent screen of low-pressure mercury vapour discharge lamps for special purposes (for example electrophotography) or, in combination with other luminescent materials, in similar lamps for general lighting purposes.

The Mn-activated borates ($z=0$) used in luminescent screens according to the invention luminesce in a band (half value width approximately 80 nm) with a maximum in the red portion of the spectrum at approximately 635 nm. They are therefore very suitable for use as the red component or as a colour-correcting component in the luminescent screen of low-pressure mercury vapour discharge lamps for general lighting purposes. Also in these materials the excitation energy is transferred from the Ce (Ce-content from 0.01 to $1-y$) to the Mn. These materials may also contain Gd (*y* from 0 to 0.99). The Mn-content *p* must be chosen in the range from 0.01 to 0.30.

The Cd-containing borates which contain both Mn and Tb (consequently $p \neq 0$ and $z \neq 0$) show the red Mn-emission as well as the green Tb-emission. These materials are suitable for use in the screen of low-pressure mercury vapour discharge lamps for general lighting purposes. In these materials the Ce is again present in a concentration of at least 0.01 and not more than $1-y-z$. The materials may contain Gd (*y* from 0 to 0.98). The range for the Tb and Mn-content is equal to the range of the materials having only Tb or only Mn-emission ($0.01 \leq z \leq 0.75$ and $0.01 \leq p \leq 0.30$).

The Ce-emission is most efficient in the Cd-containing borates (wherein $y=z=p=0$) which have a Ce-content *x* from 0.01 to 0.50. A luminescent screen comprising materials of this type is therefore preferred, if, Ce-emission is desired.

According to the invention, a next preferred embodiment of a luminescent screen is characterized in that

$z=p=0$
$0.01 \leq x \leq 0.50$
$0.05 \leq y \leq 0.75$
$x+y \leq 1.$

Namely, the most efficient Gd-emission is obtained with Gd-contents from 0.05 to 0.75 and Ce-contents from 0.01 to 0.50.

The most efficient green Tb-emission is found in those borates defined by the above-mentioned general formula, and in which (Mg, Zn) has been partly or wholly replaced by Cd, which do not contain Mn ($p=0$) and wherein all the available Y and La-sites are occupied by Ce, Tb and, as the case may be by Gd ($x+y+z=1$), and wherein the Tb content satisfies $0.01 \leq z \leq 0.75$.

According to the invention, a still further advantageous embodiment of a luminescent screen comprises a Cd-containing borate defined by the above-mentioned general formula, and is characterized in that $z=0$, $0.01 \leq p \leq 0.30$ and $x+y=1$. Also for the Ce and Mn-activated borates with red Mn emission it has been found that the most efficient materials are obtained if the Y and La are wholly replaced by Ce and, as the case may be, by Gd.

A preferred embodiment of a luminescent screen with which, in combination with a low-pressure mercury vapour discharge white light can be generated comprises a Ce, Tb and Mn-activated borate and is characterized in accordance with the invention in that the borate is defined by the above-mentioned general formula and in which (Mg, Zn) has been partly or wholly replaced by Cd and that $0.01 \leq p \leq 0.30$, $0.01 \leq z \leq 0.75$ and $x+y+z=1$. It has been found that also in these borates complete substitution of Y and La by Ce, Tb and, as the case may be by Gd is advantageous.

Embodiments of the invention will now be described and further explained by way of example with reference to the accompanying drawing.

In the drawing

Figure 1 is a schematic, cross-sectional view of a low-pressure mercury vapour discharge lamp in accordance with the invention,

Figure 2 shows the emission spectrum of a Ce and Tb-activated borate,

Figure 3 shows the emission spectrum of a Ce and Mn-activated borate and

Figure 4 shows the emission spectrum of a Ce, Tb and Mn-activated borate.

In Figure 1, reference numeral 1 denotes the glass wall of a low-pressure mercury vapour discharge lamp in accordance with the invention. Electrodes 2 and 3 between which the discharge takes place during

operation of the lamp are provided one at each end of the lamp. The lamp contains a rare gas mixture which serves as a starting gas, and in addition a small quantity of mercury. The lamp has a luminescent screen in the form of a luminescent layer 4 on the inside of the wall 1, which luminescent layer 4 comprises a luminescent rare earth metal metaborate in accordance with the invention. The luminescent layer 4 may be provided on the wall 1 in accustomary manner, for example by means of a suspension which contains the luminescent material.

Example 1

A mixture is made of

2.714 g $Gd_2O_3$
0.861 g $CeO_2$
0.935 g $Tb_4O_7$
0.757 g $MgO$
8.038 g $H_3BO_3$
1.122 g $CdCO_3$.

This mixture was heated for 1 hour at 1000°C in a weakly reducing atmosphere (nitrogen containing 2% by volume of hydrogen). After cooling and pulverizing, the product obtained was subjected again to the same temperature treatment. After cooling and pulverizing a luminescent rare earth metal-metaborate defined by the formula $Gd_{0.6}Ce_{0.2}Tb_{0.2}Mg_{0.75}Cd_{0.25}B_5O_{10}$ was obtained. By means of X-ray diffraction analysis it was demonstrated that this material (and also further examples of materials in accordance with the invention still to follow) has a monoclinic crystal structure similar to the structure of, for example, $LaCoB_5O_{10}$. It appears that when excited by shortwave ultraviolet radiation (predominantly 254 nm), the borate has a quantum efficiency, *q*, of 84%, the absorption A, of the exciting radiation being 91%. The emission spectrum of this material consists of the characteristic Tb-radiation and is shown in Figure 2. In this Figure 2 the wavelength λ is plotted in nm on the horizontal axis and the radiation energy E in arbitrary units is plotted on the vertical axis.

Examples 2 to 6, inclusive.

In a similar manner as described in example 1, five further metaborates were obtained with different Cd-contents and/or with different activators. The firing temperature during the two temperature treatments during the preparation of these borates were adapted to the Cd content. The results of measurements on the materials in accordance with example 1 to 6, inclusive are summarized in the following Table. In the column T the Table shows the firing temperature (in °C) during the preparation, column *q* shows the quantum efficiency (in %) at 254 nm excitation and column A shows the absorption (in %) of the exciting radiation. For the purpose of comparison, the result of the measurements on a metaborate which does not contain cadmium (not in accordance with the invention), but which in all further respects is completely identical to the metaborate of Example 1 is included as Example *a*. It appears that with the metaborates in accordance with the invention, the same quantum efficiencies can be attained as with metaborates which do not contain Cd. It is an advantage that the borates in accordance with the invention can be prepared at a lower temperature than the borates which do not contain Cd.

TABLE

| Example | Formula | T | q | A |
|---|---|---|---|---|
| a | $Gd_{0,6}Ce_{0,2}Tb_{0,2}MgB_5O_{10}$ | 1035 | 84 | 92 |
| 1 | $Gd_{0,6}Ce_{0,2}Tb_{0,2}Mg_{0,75}Cd_{0,25}B_5O_{10}$ | 1000 | 84 | 91 |
| 2 | $Gd_{0,6}Ce_{0,2}Tb_{0,2}Mg_{0,5}Cd_{0,5}B_5O_{10}$ | 1000 | 84 | 93 |
| 3 | $Gd_{0,6}Ce_{0,2}Tb_{0,2}Mg_{0,25}Cd_{0,75}B_5O_{10}$ | 950 | 86 | 91 |
| 4 | $Gd_{0,6}Ce_{0,2}Tb_{0,2}CdB_5O_{10}$ | 950 | 70 | 91 |
| 5[1)] | $Gd_{0,8}Ce_{0,2}Mg_{0,47}Cd_{0,50}Cd_{0,50}Mn_{0,03}B_5O_{10}$ | 1000 | 65 | 94 |
| 6[2)] | $Gd_{0,6}Ce_{0,2}Tb_{0,2}Mg_{0,47}Cd_{0,50}Mn_{0,03}B_5O_{10}$ | 1000 | 80 | 93 |

[1)] The emission spectrum of this material, consisting of a band having a maximum at approximately 635 nm is shown in Figure 3.

[2)] Figure 4 shows the emission spectrum of this borate. This spectrum comprises both the green Tb-emission and the red Mn-emission. The colour point of the emitted radiation is x=0.4570 and y=0.4929.

**Claims**

1. A luminescent screen comprising provided on a carrier, a luminescent rare earth metal-metaborate defined by the formula

$$(Y, La)_{1-x-y-z}Ce_xGd_yTb_z(Mg, Zn)_{1-p}Mn_pB_5O_{10},$$

wherein
when $y=z=p=0$, it holds that
$0.01 \leqslant x \leqslant 1.0$,
when $z=p=0$ and $y \neq 0$, it holds that
$0,01 \leqslant x \leqslant 1-y$
$0,02 \leqslant y \leqslant 0.80$,
when $p=0$ and $z \neq 0$, it holds that
$0.01 \leqslant x \leqslant 1-y-z$
$0 \leqslant y \leqslant 0.98$
$y+z \leqslant 0.99$
$0.01 \leqslant z \leqslant 0.75$,
when $z=0$ and $p \neq 0$, it holds that
$0.01 \leqslant x \leqslant 1-y$
$0 \leqslant y \leqslant 0.99$
$0.01 \leqslant p \leqslant 0.30$,
and when both $p \neq 0$ and $z \neq 0$, it holds that
$0.01 \leqslant x \leqslant 1-y-z$
$0 \leqslant y \leqslant 0.98$
$0.01 \leqslant z \leqslant 0.75$
$y+z \leqslant 0.99$
$0.01 \leqslant p \leqslant 0.30$,
and wherein up to 20 mol.% of the B may be replaced by Al and/or Ga, characterized in that the metaborate contains Cd which partly or wholly replaces the Mg and/or Zn.

2. A luminescent screen as claimed in Claim 1, characterized in that
$y=z=p=0$ and
$0.01 \leqslant x \leqslant 0.50$.

3. A luminescent screen as claimed in Claim 1, characterized in that
$z=p=0$
$0.01 \leqslant x \leqslant 0.50$.
$0.05 \leqslant y \leqslant 0.75$
$x+y \leqslant 1$.

4. A luminescent screen as claimed in Claim 1, characterized in that $p=0$, $0.01 \leqslant z \leqslant 0.75$, and $x+y+z=1$.

5. A luminescent screen as claimed in Claim 1, characterized in that $z=0$, $0.01 \leqslant p \leqslant 0.30$, and $x+y=1$.

6. A luminescent screen as claimed in Claim 1, characterized in that $0.01 \leqslant p \leqslant 0.30$, $0.01 \leqslant z \leqslant 0.75$ and $x+y+z=1$.

7. A low-pressure mercury vapour discharge lamp comprising a luminescent screen as claimed in one or more of the Claims 1 to 6.

**Patentansprüche**

1. Leuchtschirm mit einem auf einem Träger angebrachten, leuchtenden Seltenerdmetallmetaborat entsprechend der Formel

$$(Y, La)_{1-x-y-z}Ce_xGd_yTb_z(Mg, Zn)_{1-p}Mn_pB_5O_{10},$$

worin
bei $y=z=p=0$ gilt dass,
$0,01 \leqslant x \leqslant 1,0$,
bei $z=p=0$ und $y \neq 0$ gilt dass,
$0,01 \leqslant x \leqslant 1-y$
$0,02 \leqslant y \leqslant 0,80$
bei $p=0$ und $z \neq 0$ gilt, dass
$0,01 \leqslant x \leqslant 1-y-z$
$0 \leqslant y \leqslant 0,98$
$y+z \leqslant 0,99$
$0,01 \leqslant z \leqslant 0,75$
bei $z=0$ und $p \neq 0$ gilt, dass
$0,01 \leqslant x \leqslant 1-y$
$0 \leqslant y \leqslant 0,99$
$0,01 \leqslant p \leqslant 0,30$

und bei $p\neq0$ und $z\neq0$ gilt, dass

$0{,}01\leq x\leq1-y-z$
$0\leq y\leq0{,}98$
$0{,}01\leq z\leq0{,}75$
$y+z\leq0{,}99$
$0{,}01\leq p\leq0{,}30$

und worin bis zu 20 Mol% von B durch Al und/oder Ga ersetzt sein kann, dadurch gekennzeichnet, dass das Metaborat Cd enthält, das das Mg und/oder Zn teilweise oder vollständig ersetzt.

2. Leuchtschirm nach Anspruch 1, dadurch gekennzeichnet, dass $y=z=p=0$ und $0{,}01\leq x\leq0{,}50$ sind.

3. Leuchtschirm nach Anspruch 1, dadurch gekennzeichnet, dass $z=p=0$

$0{,}01\leq x\leq0{,}50$
$0{,}05\leq y\leq0{,}75$
$x+y\leq1$ sind.

4. Leuchtschirm nach Anspruch 1, dadurch gekennzeichnet, dass $p=0$; $0{,}01\leq z\leq0{,}75$ und $x+y+z=1$ sind.

5. Leuchtschirm nach Anspruch 1, dadurch gekennzeichnet, dass $z=0$; $0{,}01\leq p\leq0{,}30$ und $x+y=1$ sind.

6. Leuchtschirm nach Anspruch 1, dadurch gekennzeichnet, dass $0{,}01\leq p\leq0{,}30$; $0{,}01\leq z\leq0{,}75$ und $x+y+z=1$ sind.

7. Niederdruckquecksilberdampfentladungslampe mit einem Leuchtschirm nach einem oder mehreren der Ansprüche 1 bis 6.

**Revendications**

1. Ecran luminescent comportant un métaborate de métal alcalino-terreux luminescent appliqué sur un support, et répondant à la formule

$$(Y,\ La)_{1-x-y-z}Ce_xGd_yTb_z(Mg,\ Zn)_{1-p}Mn_pB_5O_{10},$$

dans laquelle

lorsque $y=z=p=0$, il s'applique que

$0{,}01\leq x\leq1{,}0$,

lorsque $z=p=0$ et $y\neq0$, il s'applique que

$0{,}01\leq x\leq1-y$
$0{,}02\leq y\leq0{,}80$,

lorsque $p=0$ et $z\neq0$, il s'applique que

$0{,}01\leq x\leq1-y-z$
$0\leq y\leq0{,}98$
$y+z\leq0{,}99$
$0{,}01\leq z\leq0{,}75$

lorsque $z=0$ et $p\neq0$, il s'applique que

$0{,}01\leq x\leq1-y$
$0\leq y\leq0{,}99$
$0{,}01\leq p\leq0{,}30$,

et quand à la fois $p\neq0$ et $z\neq0$, il s'applique que

$0{,}01\leq x\leq1-y-z$
$0\leq y\leq0{,}98$
$0{,}01\leq z\leq0{,}75$
$y+z\leq0{,}99$
$0{,}01\leq p\leq0{,}30$,

et dans laquelle jusqu'à 20% en mole du B peut être remplacé par Al et/ou Ga, caractérisé en ce que le métaborate contient du Cd, qui remplace partiellement ou entièrement Mg et/ou Zn.

2. Ecran luminescent selon la revendication 1, caractérisé en ce que

$y=z=p=0$ et
$0{,}01\leq x\leq0{,}50$

3. Ecran luminescent selon la revendication 1, caractérisé en ce que

$z=p=0$
$0{,}01\leq x\leq0{,}50$
$0{,}05\leq y\leq0{,}75$
$x+y\leq1$.

4. Ecran luminescent selon la revendication 1, caractérisé en ce que $p=0$, $0{,}01\leq z\leq0{,}75$ et $x+y+z=1$.

5. Ecran luminescent selon la revendication 1, caractérisé en ce que $z=0$, $0{,}01\leq p\leq0{,}30$, et $x+y=1$.

6. Ecran luminescent selon la revendication 1, caractérisé en ce que $0{,}01\leq p\leq0{,}30$, $0{,}01\leq z\leq0{,}75$, et $x+y+z=1$.

7. Lampe à décharge dans la vapeur de mercure à basse pression comportant un écran luminescent selon l'une ou plusieurs des revendications 1 à 6.

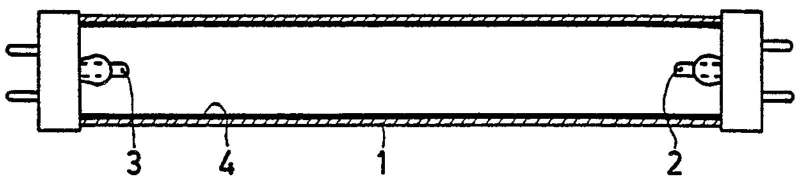


FIG.1

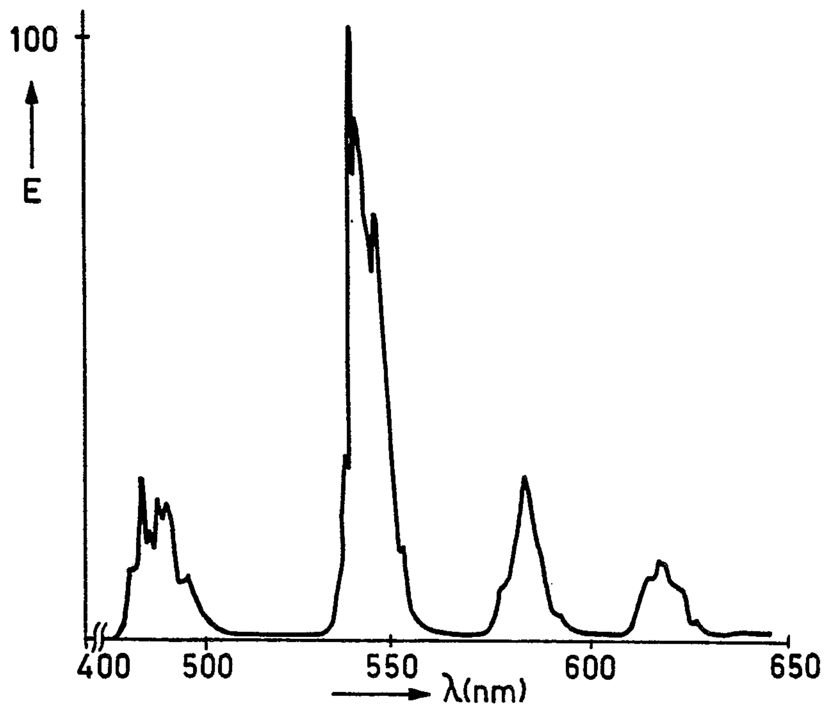


FIG.2

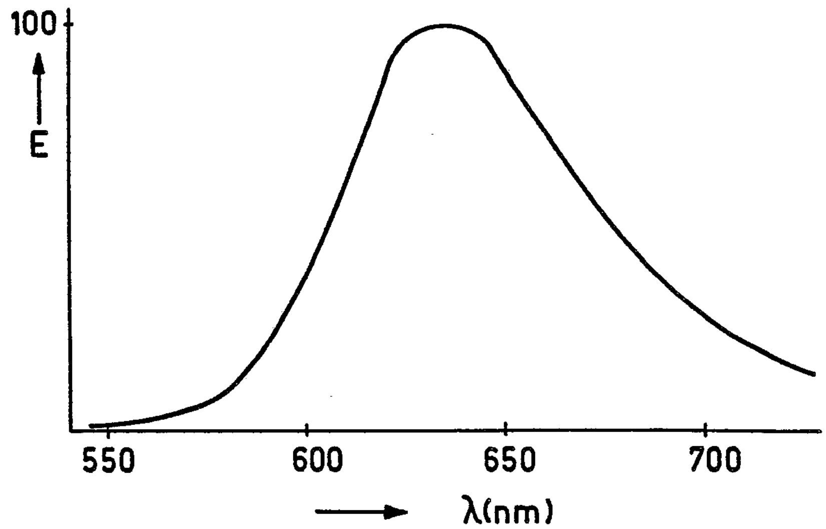


FIG.3

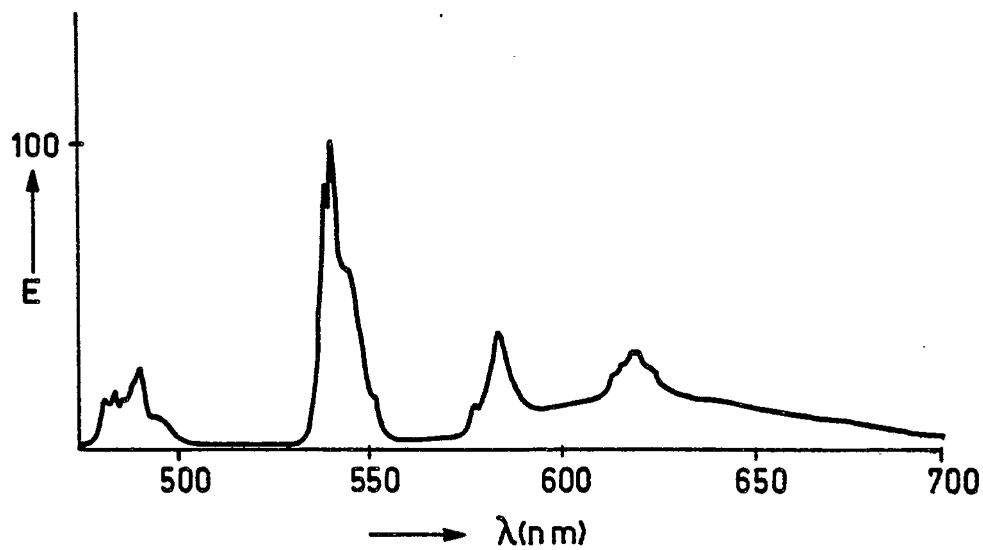


FIG.4